# EUROPEAN PATENT APPLICATION

(11) **EP 4 628 521 A1**
(43) Date of publication of application: **08.10.2025**
(21) Application number: 23897520.5
(22) Date of filing: 16.11.2023
(51) Int. Cl.: C08G 69/14, C08G 69/16

(54) **NYLON 6 RESIN AND PRODUCTION METHOD FOR SAME**

(30) Priority: 30.11.2022 JP 2022191333
(71) Applicant: Toray Industries, Inc., Tokyo 103-8666 (JP)
(72) Inventor: SAIKI, Kotaro, Nagoya-shi, Aichi 455-8502 (JP)
(74) Representative: Kador & Partner Part mbB
(86) International application number: PCT/JP2023/041252
(87) International publication number: WO 2024/116869

(57) **Abstract**

The present invention provides a nylon 6 resin and a production method for the same, the nylon 6 resin being obtained from chemical recycling with the color tone of the nylon 6 resin being equivalent to that of nylon 6 resin produced with virgin type ε-caprolactam. The nylon 6 resin of the present invention comprises chemically recycled nylon 6, and in a spectrum obtained by ¹H NMR, the nylon 6 resin includes 1 mass% or less of peaks other than nylon 6 in a range of 6.5-13.0 ppm.

## Description

### TECHNICAL FIELD

The present invention relates to a resin including chemically recycled nylon 6 and a method for producing the same.

### BACKGROUND ART

Polyamide is a material widely used in clothing and industrial applications, such as fiber products and resin products, and reuse of polyamide by recycling has been promoted due to an increasing interest in sustainability such as Sustainable Development Goals (SDGs). As a method for recycling polyamide, a thermal recycling method, a material recycling method, and a chemical recycling method are known. Among them, the chemical recycling method is an industrially useful recycling method because a polyamide resin can be decomposed into raw material monomers, followed by recovering, and reusing as a raw material of a polymer.

Among polyamides, even in a case where nylon 6 is produced from ε-caprolactam derived from petroleum raw materials, a polymerization reaction thereof is an equilibrium reaction, so that it is general to provide an extraction step of removing a monomer/oligomer component after polymerization. From an industrial viewpoint, in order to reduce a raw material loss and a drain water load, it is common to depolymerize and reuse the recovered monomer/oligomer component, and nylon 6 is superior to other polyamides from the viewpoint of capable of utilizing this recovery and reuse cycle.

For example, Patent Literature 1 discloses a recycling method for chemically recycling a dustproof garment, and Patent Literature 2 discloses a recycling method for chemically recycling a clothing product made of nylon 6 fibers. It is disclosed that in the methods, assuming that chemical recycling is performed from a stage of product design, by making each material in the product mainly composed of nylon 6, mixing of impurities of other resins such as polyurethane and polyester can be prevented to the minimum, and thus a monomer raw material with high purity can be obtained.

In addition, Patent Literature 3 discloses a method for recycling a clothing product of nylon 6, in which ε-caprolactam, which is a monomer, can be recovered while avoiding facility trouble at the time of depolymerization by limiting contents of a water repellent agent and a titanium oxide to a certain amount or less. It is disclosed that by regulating a mixing ratio of substances inhibiting a depolymerization step of returning a nylon product to ε-caprolactam as a raw material, the depolymerization can be performed without clogging a distillation line.

Further, Patent Literature 4 discloses a method for recycling a nylon 6 product containing one or more resin components as impurities by performing pretreatment of heating the product in an alkaline aqueous solution.

### CITATION LIST

### PATENT LITERATURE

Patent Literature 1: JPH07-331514A
Patent Literature 2: JPH07-310205A
Patent Literature 3: JP2009-227960A
Patent Literature 4: JP2008-179816A

### SUMMARY OF INVENTION

### TECHNICAL PROBLEM

However, since the methods of Patent Literatures 1 and 2 use a design in which use of resins and members other than nylon 6 is limited, although the quality of ε-caprolactam obtained by chemical recycling is high in purity, in addition to that applicable products are limited, it is necessary to recover the nylon-6 products so as not to be mixed with other products, which results in extremely limited chemical recycling. Further, the methods cannot be applied to chemical recycling of general nylon-6 products existing in the marketplace.

In the method of Patent Literature 3, by paying attention to a substance that inhibits the depolymerization of the nylon-6 product and limiting the ratio thereof, the quality in purity of the ε-caprolactam is increased. However, in addition to the necessity of sorting a product not containing a resin other than nylon 6, since the content of the water repellent agent or titanium oxide in the product cannot be quantitatively determined without chemical analysis, it is not realistic to apply the method to general nylon 6 products, and the application thereof is extremely limited in industrial terms.

Further, in the method of Patent Literature 4, it is possible to chemically remove a resin other than nylon 6 which is reduced in quality of ε-caprolactam after depolymerization. However, in addition to that it is necessary to treat the product with a high-concentration base at a high temperature, it is necessary to drain other eluted members as waste liquid, and since a large load is applied to a wastewater treatment step, it is difficult to expand the quantity and to apply the method to industrial applications.

Therefore, an object of the present invention is to provide a recycled nylon 6 resin and a method for producing the same, the recycled nylon 6 resin having a color tone equivalent to that of a nylon product produced from ε-caprolactam, which has not been obtained by recycling, when nylon 6 products existing in a large amount in the marketplace are chemically recycled industrially.

### SOLUTION TO PROBLEM

In order to achieve the above object, the present invention adopts the following configuration.
(1) A nylon 6 resin including chemically recycled nylon 6, in which the nylon 6 resin has 1 mass% or less of a peak other than nylon 6 in a region of 6.5 ppm or more and 13.0 ppm or less in ¹H NMR.
(2) The nylon 6 resin according to (1) including a substance other than nylon 6, the substance having a peak in the region of 6.5 ppm or more and 13.0 ppm or less in ¹H NMR, in which the substance has a benzene ring structure.
(3) A method for producing the nylon 6 resin according to (1) or (2), the method including: depolymerizing a nylon-6 recovered product as a raw material to recover ε-caprolactam; purifying and polymerizing the ε-caprolactam, in which the nylon-6 recovered product has a ratio of a polyester resin of 5 mass% or less.

### ADVANTAGEOUS EFFECTS OF INVENTION

According to the present invention, it is possible to provide a chemically recycled nylon 6 resin having a color tone equivalent to that of a so-called virgin type nylon 6 resin which is not chemically recycled.

### DESCRIPTION OF EMBODIMENTS

The present invention will be described in detail below.

In the present description, "mass" is synonymous with "weight".

A nylon 6 resin according to the present invention includes chemically recycled nylon 6, and has 1 mass% or less of a peak other than nylon 6 in a region of 6.5 ppm or more and 13.0 ppm or less in ¹H NMR. The nylon 6 resin according to the present invention preferably includes 95 mass% or more of nylon 6, more preferably 97 mass% or more of nylon 6 and further preferably 99 mass% or more of nylon 6.

The nylon 6 resin according to the present invention suitably has a relative viscosity of a 98% sulfuric acid solution in a range of 2.0 to 4.0. The nylon 6 resin may contain additives such as titanium oxide and a heat-resistant agent to such an extent that the object of the present invention is not impaired.

The nylon 6 resin according to the present invention has 1 mass% or less of a peak other than nylon 6 in the region of 6.5 ppm or more and 13.0 ppm or less in ¹H NMR. Such a peak other than nylon 6 is more preferably 0.7 mass% or less, and further preferably 0.5 mass% or less, and on the other hand, a lower limit thereof is preferably 0.1 mass% or more. That is, the peak other than nylon 6 in the region of 6.5 ppm or more and 13.0 ppm or less in ¹H NMR is preferably contained in a range of 0.1 mass% or more and 1 mass% or less. The region of 6.5 ppm or more and 13.0 ppm or less in ¹H NMR has a peak in which a hydrogen atom bonded to a multiple bond or to an aromatic group can be confirmed and the hydrogen atom affects the color tone of the resin. When the peak contained in this region is 1 mass% or less, a nylon 6 resin having a good color tone is obtained. Examples of a substance other than nylon 6 that can be confirmed at the peak in the region include those having a benzene ring structure, and it is particularly desirable to control a content of the substance containing a benzene ring structure. When the benzene ring structure is contained in a large amount, the color tone of the obtained nylon 6 resin may deteriorate. Examples of the substance having a benzene ring structure include terephthalic acid.

The ¹H NMR in the present invention may be measured by any method. For example, resin pellets are dissolved in heavy hexafluoroisopropanol (HFIP) (containing tetramethylsilane (TMS)), and ¹H NMR is measured. Other heavy solvents may be used as long as the nylon 6 dissolves therein. An integration ratio is calculated based on a peak attributed to each component to calculate an amount of the component. An amount of a component other than nylon 6 in the present invention is calculated based on area ratio between a peak area of 4H at 8 ppm to 8.5 ppm derived from terephthalic acid and a peak area of 2H at 3 ppm to 3.5 ppm derived from nylon 6. The peak is not limited to the above peak as long as the peak does not interfere with other peaks and can be identified.

A method for producing the nylon 6 resin according to the present invention will be described.

The method for producing the nylon 6 resin according to the present invention includes depolymerizing a nylon-6 recovered product as a raw material to recover ε-caprolactam, purifying and polymerizing the ε-caprolactam, in which a ratio of a polyester resin in the nylon-6 recovered product is 5 mass% or less. The nylon-6 recovered product is pre-consumer waste and/or post-consumer waste. The waste is not limited to the following, but examples of the pre-consumer waste include pushed waste, yarn breakage waste, and extrusion waste in a yarn making process, and examples of the post-consumer waste include a recovered clothing product, a fishing net, and a rope.

The depolymerization performed in the present invention may be performed by any method. The nylon-6 recovered product is melted by heating and depolymerized. In this case, a catalyst may be used, and the depolymerization can be carried out in the absence of water (dry) or in the presence of water (wet).

A pressure during depolymerization may be any of reduced pressure, normal pressure, and applied pressure. A depolymerization temperature is preferably 100°C to 400°C, more preferably 200°C to 350°C, and further preferably 220°C to 300°C. When the temperature is too low, the nylon-6 recovered product does not melt, and a depolymerization rate is slow. When the temperature is too high, a monomer of nylon 6 (that is, ε-caprolactam) is decomposed, and the purity of the recovered ε-caprolactam is reduced.

In a case where a catalyst is used, an acid catalyst or a base catalyst is used. Examples of the acid catalyst include phosphoric acid, boric acid, sulfuric acid, organic acid, organic sulfonic acid, solid acid, and salts thereof. Examples of the base catalyst include alkali hydroxide, alkali salt, alkaline earth hydroxide, alkaline earth salt, organic base, and solid base. Preferred examples include phosphoric acid, boric acid, organic acid, alkali hydroxide, and alkali salt. Further preferred examples include phosphoric acid, sodium phosphate, potassium phosphate, sodium hydroxide, potassium hydroxide, sodium carbonate, potassium carbonate, sodium hydrogen carbonate, and potassium hydrogen carbonate.

The catalyst is preferably used in an amount of 0.01 mass% to 50 mass% with respect to the nylon-6 recovered product. The amount is more preferably 0.01 mass% to 20 mass%, and further preferably 0.5 mass% to 10 mass%. When the amount of the catalyst is too small, a reaction rate becomes slow. When the amount of the catalyst is too large, side reactions are increased, and a catalyst cost is increased, which is economically disadvantageous.

In a case of wet depolymerization, an amount of water is preferably 0.1 times by mass to 50 times by mass with respect to the nylon-6 recovered product. The amount is more preferably 0.5 times by mass to 20 times by mass, and further preferably 1 time by mass to 10 times by mass. When the amount of water is too small, the reaction rate becomes slow, and when the amount is too large, a concentration of an aqueous solution of the recovered ε-caprolactam becomes low.

It is desirable that the nylon-6 recovered product to be depolymerized contains less other resin components such as polyurethane and polyester. The resin component other than nylon 6 is preferably 5 mass% or less, and further preferably 3 mass% or less, and a lower limit thereof is preferably 1 mass% or more, with respect to the nylon-6 recovered product. When a nylon-6 recovered product to which other resins adhere and remain attached is decomposed by depolymerization, the purity of the recovered ε-caprolactam may be reduced, and the viscosity of a molten raw material may be caused to increase and a catalyst may be deactivated during depolymerization, resulting in a reduction in recovery rate of ε-caprolactam. In particular, when polyethylene terephthalate, which is a representative polyester resin, is contained, there is a possibility that problems may occur in operation of a recycling plant, such as blocking of a pipe of a depolymerization facility due to sublimation of terephthalic acid which is a by-product at the time of depolymerization, and thus in the present invention, the ratio of the polyester resin in the nylon-6 recovered product is 5 mass% or less. The ratio of the polyester resin is preferably 3 mass% or less, and preferably 1 mass% or more. That is, the ratio of the polyester resin is preferably 1 mass% or more and 5 mass% or less.

In order to control contents of the other resin components such as the polyester resin to be 5 mass% or less, for example, a method for physically removing a component containing the other resin components, a method for dissolving the other resin components in a good solvent to chemically separate and remove the other resin components, and the like are exemplified.

A method for recovering ε-caprolactam carried out in the present invention is not particularly limited and may be any method. For example, in a case where dry depolymerization is performed, the generated ε-caprolactam is distilled from a depolymerization reaction device by vacuum distillation and recovered. After the depolymerization reaction is completed, the ε-caprolactam may be extracted by vacuum distillation. The ε-caprolactam may be extracted continuously with the progress of the depolymerization reaction. In addition, in a case where wet depolymerization is performed, the generated ε-caprolactam is distilled together with water from the depolymerization reaction device, and an aqueous solution of ε-caprolactam is recovered. After the depolymerization reaction is completed, the ε-caprolactam may be extracted by vacuum distillation. The ε-caprolactam may be extracted continuously with the progress of the depolymerization reaction.

Examples of a method for purifying the recovered ε-caprolactam include a method for subjecting the recovered ε-caprolactam to precision distillation, a method for subjecting the recovered ε-caprolactam to vacuum distillation by adding a trace amount of sodium hydroxide, a method for subjecting the recovered ε-caprolactam to an activated carbon treatment, a method for subjecting the recovered ε-caprolactam to an ion exchange treatment, and a method for subjecting the recovered ε-caprolactam to recrystallization, and these purification methods can be combined.

A degree of coloration of the ε-caprolactam obtained by the depolymerization performed in the present invention is measured by putting an aqueous solution containing 50 mass% of ε-caprolactam in a quartz cell having a length of 10 mm and measuring the transmittance based on water at a wavelength of 290 nm using a spectrophotometer. In general, the higher the transmittance, the lower the degree of coloration. When the degree of coloration of the ε-caprolactam is low, the color tone of the nylon 6 resin can be reduced. The transmittance of the aqueous solution containing 50 mass% of ε-caprolactam is preferably 30% or more, and further preferably 50% or more. Since a higher transmittance is preferable, an upper limit is not particularly limited.

The polymerization performed in the present invention may be performed by any method. For example, an aqueous solution containing 80 mass% to 95 mass% of the recovered and purified ε-caprolactam is charged into a stainless steel autoclave (polymerization reaction device), an inside of the polymerization reaction device is sealed with nitrogen, then a temperature is increased for 1 hour to 3 hours until an internal pressure of the polymerization reaction device reaches 0.8 MPa to 1.2 MPa, and a polymerization reaction is performed at 240°C to 260°C for 1 hour to 2 hours while maintaining the pressure. Thereafter, the pressure in the polymerization reaction device is released, polymerization is further performed under a nitrogen stream for 1 hour to 2 hours, and then the obtained polymer is extruded in a strand shape, followed by cooling and cutting to obtain pellets. Next, the obtained pellets are transferred to an atmospheric-pressure vessel with hot water of an amount of 5 times to 20 times the amount of the pellets, and retained at a water temperature of 90°C to 100°C for 12 hours to 24 hours, and subjected to dehydration after unreacted monomer components or oligomer components are extracted.

### EXAMPLES

The present invention will now be described in more detail with reference to examples.

### [Measurement Method]

### <Transmittance>

The obtained ε-caprolactam and purified water were mixed to obtain an aqueous solution containing 50 mass% of ε-caprolactam, which was put into a quartz cell having a length of 10 mm, followed by measuring transmittance based on water at a wavelength of 290 nm using a spectrophotometer, and the measured transmittance was shown as a color tone.

### <Color Tone YI>

A YI value of resin pellets was measured using a color computer manufactured by Suga Test Instruments Co., Ltd. A measurement method was performed in accordance with JIS K7105 (testing methods for optical properties of plastics).

### <Amount of Component of Peak other than Nylon 6>

1 mg of the resin pellets were dissolved in 0.4 mL of heavy HFIP, and ¹H NMR was measured using ECA-400 manufactured by JEOL Ltd. A component amount of a substance other than nylon 6 in a region of 6.5 ppm to 13.0 ppm was calculated based on a peak attributed to each component.

### (Example 1)

To 420 g of a nylon-6 recovered product containing 21 g of a polyester resin, 16.8 g of a 75 mass% phosphoric acid aqueous solution containing phosphoric acid as a depolymerization catalyst was charged into a depolymerization device, and heated to 260°C under a nitrogen atmosphere.

Nitrogen was turned off, superheated water vapor was blown into the depolymerization device at an introduction rate of 500 g/h to initiate a reaction, the reaction was performed at 260°C for 10 hours, and water vapor containing ε-caprolactam continuously distilled from the depolymerization device was recovered and cooled to obtain an ε-caprolactam aqueous solution.

The obtained ε-caprolactam aqueous solution was concentrated by evaporating moisture using an evaporator under reduced pressure conditions of about 70°C and 3.3 kPa, and then transferred to a 1000-ml Houben flask.

Then, 5.3 g of 40 mass% sodium hydroxide aqueous solution was added thereto, and the mixture was further concentrated under reduced pressure conditions of about 100°C and 3.3 kPa. Subsequently, ε-caprolactam was subjected to vacuum distillation under reduced pressure conditions of about 160°C and 0.7 kPa to obtain 335 g of purified ε-caprolactam. The transmittance of an aqueous solution containing 50 mass% of ε-caprolactam was 37%.

Water was added to the above ε-caprolactam to prepare a 90 mass% ε-caprolactam aqueous solution, the aqueous solution was put into a polymerization vessel, followed by heating while being stirred in a sealed state, and when a pressure in the vessel reached 1 MPa, water vapor was evaporated, and the pressure was maintained at that level. When an internal liquid temperature reached 250°C, the pressure in the vessel was gradually reduced to atmospheric pressure in 70 minutes. The internal liquid temperature at that time was 260°C. Thereafter, nitrogen was allowed to flow into a gaseous phase portion in the vessel for 60 minutes while maintaining the internal liquid temperature at 260°C to complete the polymerization.

After the polymerization was completed, nylon 6 in a molten state was extruded from a bottom portion of the polymerization vessel into a gut shape, cooled with water, and then cut with a pelletizer to obtain pellets. The pellets were subjected to extraction of low molecular weight impurities with hot water to obtain nylon 6 resin pellets obtained by chemical recycling.

For the obtained resin pellets, a component amount of a substance other than nylon 6 having a peak in a region of 6.5 ppm or more and 13.0 ppm and a color tone YI were measured. Results are shown in Table 1.

### (Example 2, Example 3, and Comparative Example 1)

These examples were carried out in the same manner as in Example 1 except that an amount of the polyester resin in the nylon-6 recovered product was changed as shown in Table 1.

### (Reference Example 1)

This example was carried out in the same manner as in Example 1 except that the polymerization was performed by using virgin type ε-caprolactam as a raw material.

**[Table 1]**

| | | | Example 1 | Example 2 | Example 3 | Comparative Example 1 | Reference Example 1 |
|---|---|---|---|---|---|---|---|
| Nylon-6 recovered product | Nylon 6 resin | mass% | 95 | 97 | 99 | 93 | - |
| | Polyester resin | mass% | 5 | 3 | 1 | 7 | - |
| Aqueous solution containing 50 mass% of caprolactam | Transmittance | % | 37 | 57 | 65 | 25 | 90 |
| Nylon 6 resin pellet | Color tone YI | - | 4.2 | 1.7 | 1.0 | 6.4 | -0.9 |
| | Amount of component other than nylon 6 (¹H NMR integration ratio calculation) | mass% | 0.7 | 0.5 | 0.2 | 1.3 | - |

Based on Table 1, in Examples 1 to 3, a nylon 6 resin having a color tone close to that of Reference Example 1, which was a newly produced nylon 6 resin instead of a recycled material, could be obtained as compared with Comparative Example 1.

Although the present invention has been described in detail with reference to specific embodiments, it is apparent to those skilled in the art that various changes and modifications may be made without departing from the spirit and scope of the present invention. The present application is based on Japanese Patent Application No. 2022-191333 filed on November 30, 2022, and the content thereof is incorporated herein by reference.

## Claims

1. A nylon 6 resin comprising chemically recycled nylon 6, wherein the nylon 6 resin has 1 mass% or less of a peak other than nylon 6 in a region of 6.5 ppm or more and 13.0 ppm or less in ¹H NMR.

2. The nylon 6 resin according to claim 1 comprising a substance other than nylon 6, the substance having a peak in the region of 6.5 ppm or more and 13.0 ppm or less in ¹H NMR,
wherein the substance has a benzene ring structure.

3. A method for producing the nylon 6 resin according to claim 1 or 2, the method comprising:
depolymerizing a nylon-6 recovered product as a raw material to recover ε-caprolactam;
purifying and polymerizing the ε-caprolactam,
wherein the nylon-6 recovered product has a ratio of a polyester resin of 5 mass% or less.
